# EUROPÄISCHE PATENTSCHRIFT

(11) **EP 0 673 293 B1**
(45) Veröffentlichungstag und Bekanntmachung des Hinweises auf die Patenterteilung: **15.01.1997**
(21) Anmeldenummer: 94901848.5
(22) Anmeldetag: 23.11.1993
(51) Int. Cl.: B23B 29/034

(54) **AUSDREHWERKZEUG**
BORING TOOL
OUTIL D'ALESAGE

(30) Priorität: 14.12.1992 DE 4242063
(43) Veröffentlichungstag der Anmeldung: 27.09.1995
(73) Patentinhaber: WOHLHAUPTER GMBH, D-72636 Frickenhausen (DE)
(72) Erfinder: WOHLAUPTER, Manfred, D-72639 Neuffen (DE); GÄHR, Harold, D-72636 Frickenhausen (DE); MAAR, Peter, D-72636 Frickenhausen (DE); WOHLHAUPTER-HERMANN, Rolf, D-72636 Frickenhausen (DE)
(74) Vertreter: Griessbach, Dieter, Dr.
(86) Internationale Anmeldenummer: EP9303277
(87) Internationale Veröffentlichungsnummer: WO9413420

(56) Entgegenhaltungen:
- CH-A- 354 646
- DE-B- 874 550
- US-A- 2 745 668

## Beschreibung

Die Erfindung betrifft ein Ausdrehwerkzeug mit einem in eine drehend angetriebene Spindel einspannbaren und mit der Spindel umlaufenden Werkzeugkörper, mit einem im Werkzeugkörper quer zu dessen Drehachse in einer Führung verschiebbaren Werkzeugschlitten, mit einer am Werkzeugschlitten auswechselbar befestigen, zerspanenden Schneidplatte, mit einer im Werkzeugkörper quer zu dessen Drehachse drehbar und axial unverschieblich gelagerten Mikrometerschraube zum Verstellen des Werkzeugschlittens in seiner Führung und mit verstellbaren Ausgleichsmassen zur Auswuchtung des Ausdrehwerkzeuges bezüglich seiner Drehachse.

Ein solches Ausdrehwerkzeug ist aus DE-A1-35 10 259 bekannt. Bei diesem Ausdrehwerkzeug müssen die Unwuchtmassen separat von der Einstellung des Werkzeugschlittens verstellt werden, um die Auswuchtung des Ausdrehwerkzeuges zu vollziehen.

Es ist Aufgabe der Erfindung, ein gattungsgemäßes Ausdrehwerkzeug so weiterzubilden, daß die beim radialen Verstellen des Werkzeugschlittens auftretenden Massenverschiebungen automatisch so kompensiert werden, daß keine störenden Unwuchtkräfte entstehen.

Diese Aufgabe wird erfindungsgemäß dadurch gelöst, daß
A) die Mikrometerschraube im Werkzeugkörper unter Freilassung eines Zwischenraumes mit Abstand über dem Werkzeugschlitten gelagert ist und einen im Werkzeugkörper quer zu dessen Drehachse verschieblichen Antriebsschlitten antreibt;
B) im Zwischenraum zwischen Antriebs- und Werkzeugschlitten schwenkbar ein zweiarmiger Übertragungshebel gelagert ist, der mit seinem einen Arm am Antriebsschlitten und mit seinem anderen Arm am Werkzeugschlitten angreift, so daß bei einer Verschiebung des Antriebsschlittens durch die Mikrometerschraube der Werkzeugschlitten entsprechend dem Übersetzungsverhältnis des Übertragungshebels gegenläufig zum Antriebsschlitten mitgenommen wird; und
C) der Antriebsschlitten gleichzeitig die verstellbare Ausgleichsmasse bildet, wobei diese Masse einerseits und die Masse des Werkzeugschlittens einschließlich Schneidplatte andererseits so bemessen sind, daß die Gesamtanordnung von Antriebs- und Werkzeugschlitten bei ihrer gegenläufigen Bewegung bezüglich der Drehachse stets ausgewuchtet ist.

Bei einem bekannten Ausdrehwerkzeug anderer Art (DE-C2-39 26 026) wird durch axiales Verschieben einer Hülse ein über eine Kugel an ihr anliegender Hebel verschwenkt, der mit seinem anderen Ende ein in sich federndes Kopfteil radial verstellt, welches seinerseits ein Ausdrehwerkzeug trägt. Bei der radialen Verstellung des Kopfteils findet über eine weitere Kugel gleichzeitig eine radiale Verstellung eines Schiebers in entgegengesetzter Richtung statt, wodurch automatisch ein Unwuchtausgleich erfolgt.

Diese Anordnung ist wegen der Verwendung eines besonderen Schiebers zum Unwuchtausgleich, der nicht direkt mit einem Hebel verbunden ist, sondern zu seinem Antrieb ein besonderes Teil, nämlich die Kugel erfordert, kompliziert und störanfällig und mit der erfindungsgemäßen Lösung nicht vergleichbar, weil dort der Übertragungshebel sowohl die Verstellung des Werkzeugschlittens, wie auch den Unwuchtausgleich durch Verschieben des Antriebsschlittens direkt auslöst. Ein zusätzliches Teil für den Unwuchtausgleich entsprechend der Kugel bei der bekannten Anordnung gelangt also bei der Erfindung in Wegfall.

Die nachstehende Beschreibung einer bevorzugten Ausführungsform der Erfindung dient im Zusammenhang mit beiliegender Zeichnung der weiteren Erläuterung. Es zeigen:
- Figur 1: eine schematische Axialschnittansicht eines Ausdrehwerkzeuges;
- Figur 2: eine teilweise geschnittene Seitenansicht des Ausdrehwerkzeuges in Richtung des Pfeiles A in Figur 1;
- Figur 3: eine Teilschnittansicht ähnlich Figur 1 mit einem Werkzeugschlitten in anderer Position und

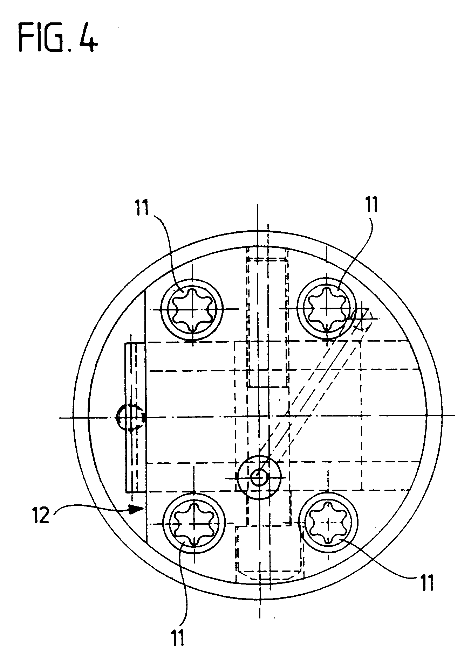

- Figur 4: eine Untenansicht eines Deckels für das Ausdrehwerkzeug aus Figur 1 bis 3.

Das auf der Zeichnung dargestellte Ausdrehwerkzeug 1 umfaßt einen im wesentlichen kreiszylindrischen Werkzeugkörper 2, der außen von einer Hülse 3, vorzugsweise aus einer Chromlegierung, umschlossen ist. Der Werkzeugkörper 2 weist einstückig abstehend einen Schaft 4 auf, der, z. B. mittels eines Spannfutters, in eine drehend angetriebene Spindel 5 einer Werkzeugmaschine eingespannt werden kann, so daß das Ausdrehwerkzeug 1 zusammen mit der Spindel 5 um eine gemeinsame Drehachse B umläuft.

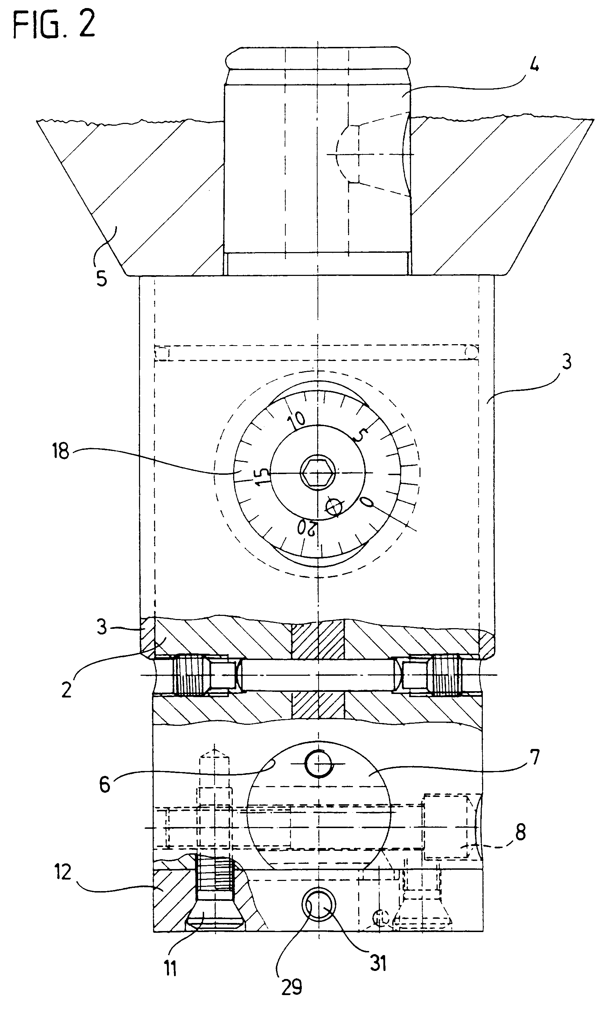

In eine quer zur Drehachse B verlaufende Ausnehmung 6 im unteren Bereich des Werkzeugkörpers 2 ist radial verschieblich ein Werkzeugschlitten 7 eingesetzt. Ein Schraubbolzen 8, der eine Aussparung 9 des Werkzeugschlittens 7 durchdringt, dient der Klemmung und Fixierung des Werkzeugschlittens 7 in seiner eingestellten Position. Die zueinander komplementären Querschnittsformen der Ausnehmung 6 und des Werkzeugschlittens 7 sind aus Figur 2 ersichtlich, wonach der im wesentlichen kreiszylindrische Werkzeugschlitten 7 an seiner Unterseite abgeflacht ist. An dieser flachen Unterseite liegt ein mit dem Werkzeugkörper 2 durch Schrauben 11 verbundener flacher Deckel 12 an, der hierdurch eine Verdrehsicherung des Werkzeugschlittens 7 bildet.

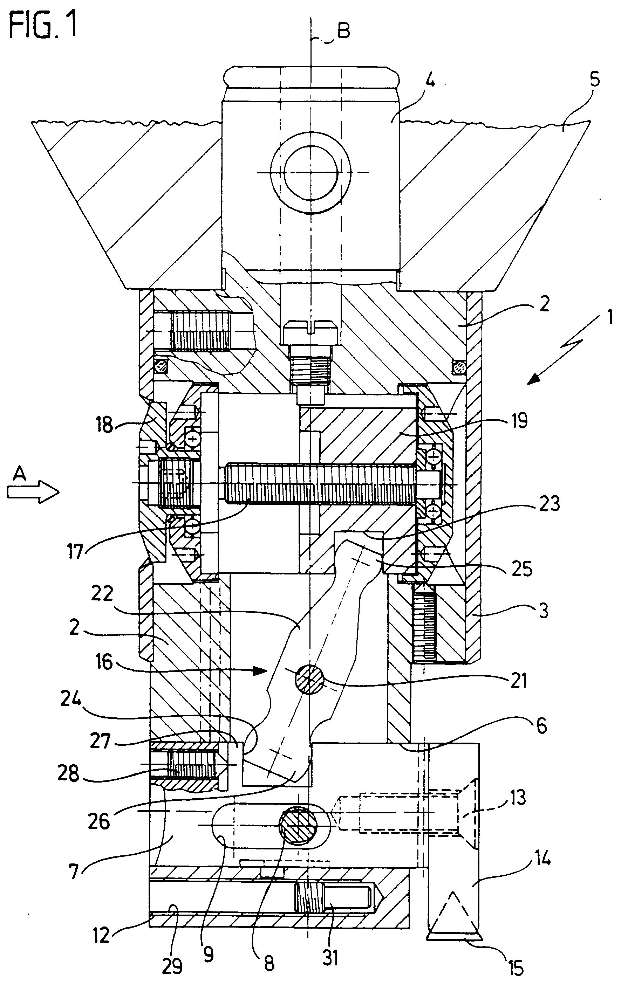

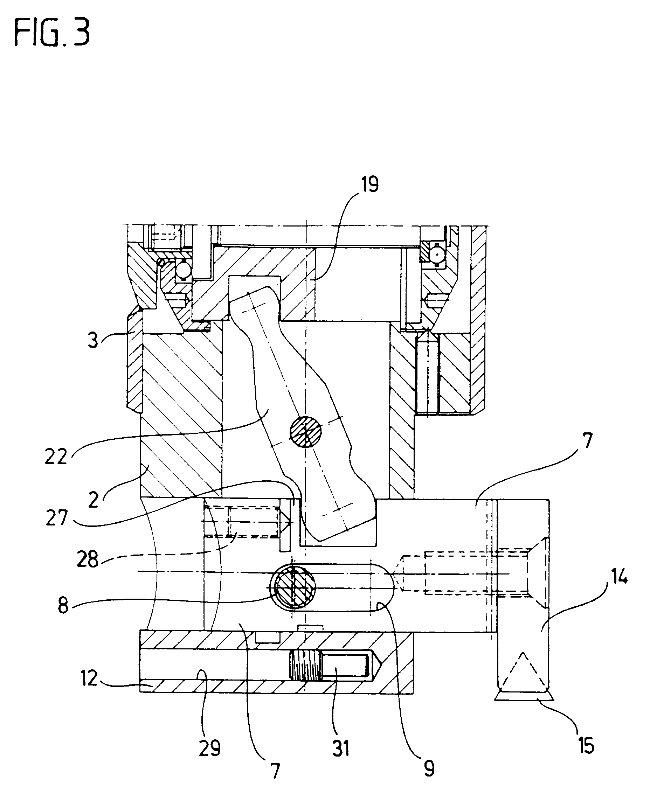

Auf der einen (in Figur 1 und 3 rechts gelegenen) Seite des Werkzeugschlittens 7 ist mittels einer Schraube 13 ein Schneidplattenträger 14 gehalten, in dem in an sich bekannter Weise auswechselbar eine der Zerspanung eines Werkstückes dienende Schneidplatte 15 befestigt ist. Durch radiale Verstellung des Werkzeugschlittens 7 und damit der Schneidplatte 15 können entsprechende Ausdreh- oder Ausbohrradien eingestellt werden.

Die radiale Verstellung des Werkzeugschlittens 7 erfolgt mit Hilfe einer im Werkzeugkörper 2 über dem Werkzeugschlitten 7 mit Abstand und unter Freilassung eines Zwischenraumes 16 angeordneten Mikrometerschraube 17, die quer zur Drehachse B des Ausdrehwerkzeuges drehbar, jedoch axial unverschieblich im Werkzeugkörper 2 gelagert ist. Die Mikrometerschraube 17 weist auf ihrer einen (in Figur 1 links gelegenen) Seite einen Kopf 18 mit Skala und Nonius (Figur 2) auf, an dem die Mikrometerschraube 17 fein verstellt werden kann. Der mit Außengewinde versehene Schaft der Mikrometerschraube 17 greift in eine Gewindebohrung eines Antriebsschlittens 19 ein, der im Werkzeugkörper 2 unverdrehbar, jedoch axial verschieblich geführt ist, so daß bei einem Verdrehen der Mikrometerschraube 7 der Antriebsschlitten 19 eine radial quer zur Drehachse B gerichtete, beidseits begrenzte Hub- oder Verschiebebewegung ausführt.

Im Zwischenraum 16 zwischen dem Werkzeugschlitten 7 und dem Antriebsschlitten 19 ist mittels einer am Werkzeugkörper 2 abgestützten Achse 21 ein zweiarmiger Übertragungshebel 22 gelagert. Der Übertragungshebel 22 greift mit seinem einen (in Figur 1 oberen) Arm in eine Nut 23 des Antriebsschlittens 19 und mit seinem anderen Arm in eine Nut 24 des Werkzeugschlittens 7 ein. Da die Achse 21 zwischen dem Werkzeugschlitten und dem Antriebsschlitten 19 zu deren Verschieberichtungen querverlaufend angeordnet ist, wird somit bei einer Verschiebung des Antriebsschlittens 19 der Werkzeugschlitten 7 entsprechend dem Übersetzungsverhältnis des Übertragungshebels 22 mitgenommen, und zwar gegenläufig zum Antriebsschlitten. Auf diese Weise wird der Werkzeugschlitten 7 durch Verdrehen der Mikrometerschraube 17 fein verstellt.

Das Übersetzungsverhältnis des Übertragungshebels 22 kann an sich frei gewählt werden. Bei der dargestellten Ausführungsform ist der am Antriebsschlitten 19 angreifende Arm dieses Hebels länger als der am Werkzeugschlitten 7 angreifende Arm, so daß zwischen den Verschiebebewegungen der Schlitten 7, 19 ein Untersetzungsverhältnis derart besteht, daß eine größere Verschiebung des Antriebsschlittens 19 eine kleinere Verschiebung des Werkzeugschlittens 7 auslöst, was für eine Feineinstellung des Werkzeugschlittens 7 günstig ist.

Wie dargestellt, weisen die Arme des Übertragungshebels 22 an ihren Enden jeweils einen zylindrisch geschliffenen Kopf 25 bzw. 26 auf. Der zylindrische Kopf 25 ist genau in die Nut 23 des Antriebsschlittens 19 eingepaßt. Die Nut 24 des Werkzeugschlittens 7 ist einseitig durch eine frei abstehende, stegartige Nutwand 27 begrenzt, an der eine von der Außenseite des Ausdrehwerkzeuges 1 her zugängliche Schraube 28 angreift. Durch entsprechendes Eindrehen der Schraube 28 kann der Steg 27 so verformt werden, daß er passend an dem zylindrischen Kopf 26 des Übertragungshebels 22 anliegt und somit eine spielfreie Verbindung zwischen den Schlitten 7, 19 einerseits und dem Übertragungshebel andererseits 22 gewährleistet ist.

Bei der Herstellung des Werkzeugschlittens 7, einschließlich Schneidplattenträger 14 und Schneidplatte 15 sowie des Antriebsschlittens 19 werden deren Massen so bemessen und aneinander angepaßt, daß die Gesamtanordnung von Antriebs- und Werkzeugschlitten, einschließlich Übertragungshebel 22, bei der gegenläufigen Bewegung der beiden Schlitten 7 und 19 mit Bezug auf die Drehachse B stets ausgewuchtet ist. Durch die gegenläufige Bewegung der beiden Schlitten 7 und 19 werden also jeweils einander ausgleichende Massen radial in entgegengesetzte Richtungen verschoben, so daß in jeder Position der Schneidplatte 15 keine Unwucht am Ausdrehwerkzeug 1 auftreten kann.

Wie aus Figur 1 hervorgeht, enthält der das Ausdrehwerkzeug 1 unten abschließende Deckel 12 eine im wesentlichen parallel zur Bewegungsrichtung der Schlitten 7 und 19 verlaufende Gewindebohrung 29, in der eine Schraube 31 radial verstellbar ist. Die Schraube 31 dient als zusätzliches, verstellbares Auswuchtgewicht und kann beispielsweise zum Unwuchtausgleich der Massen unterschiedlicher Schneidplatten 15 und/oder Schneidplattenträger 14 eingesetzt werden.

Die Figur 1 zeigt den Werkzeugschlitten 7 im wesentlichen in seiner einen (linken) Extremstellung, während dieser Schlitten in Figur 3 in seiner anderen (rechten) Extremstellung dargestellt ist. In diesen beiden Extremstellungen des Werkzeugschlittens 7 liegt der mit ihm durch den Übertragungshebel 22 verbundene Antriebsschlitten 19 jeweils in einer diagonal entgegengesetzten Position.

## Patentansprüche

1. Ausdrehwerkzeug (1) mit einem in eine drehend angetriebene Spindel (5) einspannbaren und mit der Spindel umlaufenden Werkzeugkörper (2), mit einem im Werkzeugkörper quer zu dessen Drehachse (B) in einer Führung verschiebbaren Werkzeugschlitten (7), mit einer am Werkzeugschlitten auswechselbar befestigen, zerspanenden Schneidplatte (15), mit einer im Werkzeugkörper quer zu dessen Drehachse drehbar und axial unverschieblich gelagerten Mikrometerschraube (17) zum Verstellen des Werkzeugschlittens in seiner Führung und mit verstellbaren Ausgleichsmassen zur Auswuchtung des Ausdrehwerkzeuges bezüglich seiner Drehachse,
**dadurch gekennzeichnet, daß**
A) die Mikrometerschraube (17) im Werkzeugkörper (2) unter Freilassung eines Zwischenraumes (16) mit Abstand über dem Werkzeugschlitten (7) gelagert ist und einen im Werkzeugkörper (2) quer zu dessen Drehachse (B) verschieblichen Antriebsschlitten (19) antreibt;
B) im Zwischenraum (16) zwischen Antriebs- und Werkzeugschlitten (19 bzw. 7) schwenkbar ein zweiarmiger Übertragungshebel (22) gelagert ist, der mit seinem einen Arm am Antriebsschlitten (19) und mit seinem anderen Arm am Werkzeugschlitten (7) angreift, so daß bei einer Verschiebung des Antriebsschlittens (19) durch die Mikrometerschraube (17) der Werkzeugschlitten (7) entsprechend dem Übersetzungsverhältnis des Übertragungshebels (22) gegenläufig zum Antriebsschlitten (19) mitgenommen wird; und
C) der Antriebsschlitten (19) gleichzeitig die verstellbare Ausgleichsmasse bildet, wobei diese Masse einerseits und die Masse des Werkzeugschlittens (7) einschließlich Schneidplatte (15) andererseits so bemessen sind, daß die Gesamtanordnung von Antriebs- und Werkzeugschlitten (7, 19) bei ihrer gegenläufigen Bewegung bezüglich der Drehachse (B) stets ausgewuchtet ist.

2. Ausdrehwerkzeug nach Anspruch 1, dadurch gekennzeichnet, daß der Antriebsschlitten (19) und der Werkzeugschlitten (7) jeweils eine Nut (23 bzw. 24) aufweisen, in die jeweils ein Arm des Übertragungshebels (22) mit einem zylindrischen Kopf (25 bzw. 26) eingreift.

3. Ausdrehwerkzeug nach Anspruch 2, dadurch gekennzeichnet, daß die Nut (24) an wenigstens einem der Schlitten (7, 19) eine stegartige Nutwand (27) aufweist, die von einer Schraube (28) zum Kopf (26) des Übertragungshebels (22) hindrückbar ist.

4. Ausdrehwerkzeug nach Anspruch 1, dadurch gekennzeichnet, daß der Übertragungshebel (22) die Verschiebebewegung des Werkzeugschlittens (7) relativ zum Antriebsschlitten (19) untersetzt.

5. Ausdrehwerkzeug nach Anspruch 1, dadurch gekennzeichnet, daß mit dem Werkzeugkörper (2) ein Deckel (12) verbindbar ist, der ein zusätzliches, verstellbares Auswuchtgewicht (31) zum Ausgleich der Gewichte unterschiedlicher Schneidplatten (15) enthält.

6. Ausdrehwerkzeug nach Anspruch 5, dadurch gekennzeichnet, daß der Deckel (12) unterhalb des Werkzeugschlittens (7) am Werkzeugkörper (2) befestigt ist und eine Verdrehsicherung dieses Schlittens bildet.

## Claims

1. Boring tool (1) having a tool body (2) which can be clamped into a rotationally driven spindle (5) and revolves with the spindle, having a tool slide (7) which can be displaced in a guide in the tool body transversely to the axis of rotation (B) of the latter, having a machining cutting plate (15) which is interchangeably fitted on the tool slide, having a micrometer screw (17) mounted in the tool body so as to rotate transversely to the axis of rotation of the latter and in an axially fixed manner in order to adjust the tool slide in its guide, and having adjustable compensating masses for balancing the boring tool with respect to its axis of rotation, characterized in that,
A) the micrometer screw (17) is mounted in the tool body (2) at a distance above the tool slide (7) with a gap (16) being left free and actuates a drive slide (19) which can be displaced in the tool body (2) transversely to the axis of rotation (B) of the latter;
B) there is pivotably mounted in the gap (16) between drive slide and tool slide (19 and 7, respectively) a two-arm transmission lever (22) whose one arm acts on the drive slide (19) and whose other arm acts on the tool slide (7) so that, during a displacement of the drive slide (19) by the micrometer screw (17), the tool slide (7) is driven in the opposite direction to the drive slide (19) in accordance with the transmission ratio of the transmission lever (22); and
C) the drive slide (19) at the same time forms the adjustable compensating mass, said mass, on the one hand, and the mass of the tool slide (7) including cutting plate (15), on the other hand, being dimensioned so that the entire arrangement of drive slide and tool slide (7, 19) is always balanced with respect to the axis of rotation (B) during its movement in opposite directions.

2. Boring tool according to Claim 1, characterized in that the drive slide (19) and the tool slide (7) each have a groove (23 and 24, respectively) in which the respective arm of the transmission lever (22) engages by means of a cylindrical head (25 and 26, respectively).

3. Boring tool according to Claim 2, characterized in that the groove (24) on at least one of the slides (7, 19) has a ridge-like groove wall (27) which can be pressed into the head (26) of the transmission lever (22) by a screw (28).

4. Boring tool according to Claim 1, characterized in that the transmission lever (22) reduces the displacement movement of the tool slide (7) relative to the drive slide (19).

5. Boring tool according to Claim 1, characterized in that there can be connected to the tool body (2) a lid (12) which contains an additional, adjustable balancing weight (31) for compensating the weights of different cutting plates (15).

6. Boring tool according to Claim 5, characterized in that the lid (12) is mounted underneath the tool slide (7) on the tool body (2) and forms a rotation lock for said slide.

## Revendications

1. Outil d'alésage (1) comprenant un corps d'outil (2) pouvant être encastré dans une broche (5) entraînée en rotation et qui tourne avec la broche, un chariot porte-outil (7) qui peut coulisser dans un guide à l'intérieur du corps d'outil, transversalement à son axe de rotation (B), une plaquette de coupe (15) pour l'enlèvement de copeaux, fixée au chariot porte-outil de façon interchangeable, une vis micrométrique (17) montée mobile en rotation dans le corps d'outil, transversalement à son axe de rotation, mais bloquée en translation axiale, et servant à déplacer le chariot porte-outil dans son guide, et des masses d'équilibrage servant à équilibrer l'outil d'alésage par rapport à son axe de rotation, caractérisé en ce que
A) la vis micrométrique (17) est agencée dans le corps d'outil (2) en ménageant un espace intermédiaire (16) à distance au-dessus du chariot porte-outil (7), et elle entraîne un chariot d'entraînement (19) mobile en translation dans le corps d'outil (2) transversalement à son axe de rotation (B) ;
B) dans l'espace intermédiaire (16) entre le chariot d'entraînement et le chariot porte-outil (19 et 7 respectivement), est monté oscillant un levier de transmission à deux bras (22) qui attaque le chariot d'entraînement (19) par un de ses bras et le chariot porte-outil (7) par son autre bras, de sorte qu'en réponse à une translation du chariot d'entraînement (19) commandée par la vis micrométrique (17), le chariot porte-outil (7) est entraîné en sens inverse du chariot d'entraînement (19) dans un mouvement qui correspond au rapport de transformation du levier de transmission (22) ;
C) le chariot d'entraînement (19) forme en même temps la masse d'équilibrage réglable, cette masse, d'une part, et la masse du chariot porte-outil (7) avec la plaquette de coupe (15), d'autre part, étant calculées de manière que l'ensemble formé par les chariots d'entraînement et porte-outil (19, 7) soit toujours équilibré par rapport à l'axe de rotation (B) dans leurs mouvements inverses l'un de l'autre.

2. Outil d'alésage selon la revendication 1, caractérisé en ce que le chariot d'entraînement (19) et le chariot porte-outil (7) présentent chacun une rainure (respectivement 23, 24), dans chacune desquelles un bras du levier de transmission (22) est engagé par sa tête cylindrique (respectivement 25, 26).

3. Outil d'alésage selon la revendication 2, caractérisé en ce que la rainure (24) d'au moins l'un des chariot (7, 19) présente une paroi de rainure (27) formant un ligement qui peut être repoussé par une vis (28) vers la tête (26) du levier de transmission (22).

4. Outil d'alésage selon la revendication 1, caractérisé en ce que le levier de transmission (22) réduit la course de translation du chariot porte-outil (7) par rapport à celle du chariot d'entraînement (19).

5. Outil d'alésage selon la revendication 1, caractérisé en ce qu'un couvercle (12) peut être relié au corps d'outil (2), ledit couvercle recevant une masse d'équilibrage additionnelle réglable (31) servant à équilibrer le poids de différentes plaquettes de coupe (15).

6. Outil d'alésage selon la revendication 5, caractérisé en ce que le couvercle (12) est fixé au corps d'outil (2) au-dessous du chariot porte-outil (7) et forme un blocage en rotation pour ce chariot.
